# EUROPEAN PATENT APPLICATION

(11) **EP 3 316 590 A1**
(43) Date of publication of application: **02.05.2018**
(21) Application number: 16196491.1
(22) Date of filing: 30.10.2016
(51) Int. Cl.: H04N 21/431, H04N 21/234, H04N 21/4223, H04N 21/44, H04N 21/81, G06T 15/04, G06T 15/06, G06T 15/50, G06T 19/00

(54) **A METHOD AND A SYSTEM FOR GENERATING A VIDEO STREAM**

(71) Applicant: Advanced Digital Broadcast S.A., 1292 Chambesy (CH)
(72) Inventor: Dabrowski, Bartosz, 65-119 Zielona Gora (PL)
(74) Representative: Kancelaria Eupatent.pl Sp. z.o.o

(57) **Abstract**

A method for generating a video stream in a video display device (201) having a display screen (201A) and connected to a camera (202) positioned to capture an image of an area in front of the display screen (201A), the method comprising: receiving (602) a video service (110-130) comprising a video stream (131) and a geometry description stream (138, 139), wherein the geometry description stream (138, 139) comprises a descriptor of a three-dimensional geometry object (303) within the video stream (131); capturing (603) a camera image from the camera (202); applying (604) the camera image over the 3-D geometry object (303) within the video stream; and displaying (605) on the display screen (201A) the video stream (131) comprising the 3-D geometry object (303).

## Description

### TECHNICAL FIELD

The present invention relates to generating a video stream to enable enhanced user experience while watching the video stream, in particular a live video stream.

### BACKGROUND

Current solutions in the area of presentation of live video content are limited to transmission of an exact, unmodified video stream to the end user. The current video systems do not allow to customize the live content for interacting with the environment wherein that content is displayed.

There is a need to provide a method and a system to improve the current solutions for generating video streams, in order to enable enhanced user experience while watching the video stream.

### SUMMARY

There is disclosed herein a method for generating a video stream in a video display device having a display screen and connected to a camera positioned to capture an image of an area in front of the display screen, the method comprising: receiving a video service comprising a video stream and a geometry description stream, wherein the geometry description stream comprises a descriptor of a three-dimensional geometry object within the video stream; capturing a camera image from the camera; applying the camera image over the 3-D geometry object within the video stream; and displaying on the display screen the video stream comprising the 3-D geometry object.

The step of applying the camera image over the 3-D geometry object can be based on texture mapping.

The step of applying the camera image over the 3-D geometry object can be based on ray tracing.

The video service may comprise a plurality of geometry description streams, each comprising a different format of the descriptor of the three-dimensional geometry object.

The video service may comprise a plurality of geometry description streams, each comprising at least one descriptor of a three-dimensional geometry object.

There is also disclosed a non-transitory computer readable storage medium comprising instructions that, when executed by a computer, enable generating a video stream in accordance with the method as described above.

There is also disclosed a system for generating a video stream, comprising: a display screen; a camera positioned to capture an image of an area in front of the display screen; and a video display device comprising: a video service receiver configured to receive a video service comprising a video stream and a geometry description stream, wherein the geometry description stream comprises a descriptor of a three-dimensional geometry object within the video stream; and a video processor configured to: capture a camera image from the camera; apply the camera image over the 3-D geometry object within the video stream; and output for display on the display screen the video stream comprising the 3-D geometry object.

### BRIEF DESCRIPTION OF DRAWINGS

Further details and features of the present invention, its nature and various advantages will become more apparent from the following detailed description of the preferred embodiments shown in drawings, in which:
Fig. 1 presents an exemplary structure of a video stream;
Fig. 2A presents a step of rendering a 3-D geometry;
Fig. 2B presents a visualisation of a field of view;
Fig. 3 presents a camera as the observation point in an environment for a ray tracing method;
Fig. 4 presents a texture mapping rendering method diagram;
Fig. 5 presents a ray tracing rendering method diagram;
Fig. 6 presents a flowchart of a method for generating the video stream;
Fig. 7 presents a schematic of a system for generating the video stream.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DETAILED DESCRIPTION

The method and system presented herein are usable to provide enhanced user experience by providing the functionality of allowing the user (i.e. video watcher) to see the user's environment reflection in the environment of the watched video stream. A camera positioned at the display device observes the environment in front of the display device, which may include the image of the watcher. The video stream comprises a descriptor of a reflective three-dimensional object (such as a flat mirror or a reflective ball) within the video scene. The image captured by the camera is mirrored on that reflective three-dimensional object, in accordance with the shape of that object. Thereby, the user may watch the video scene with the user's reflection therein, which increases the user experience by making the user feel to be "inside" the scene. The following description will present the technical details of implementation of that functionality.

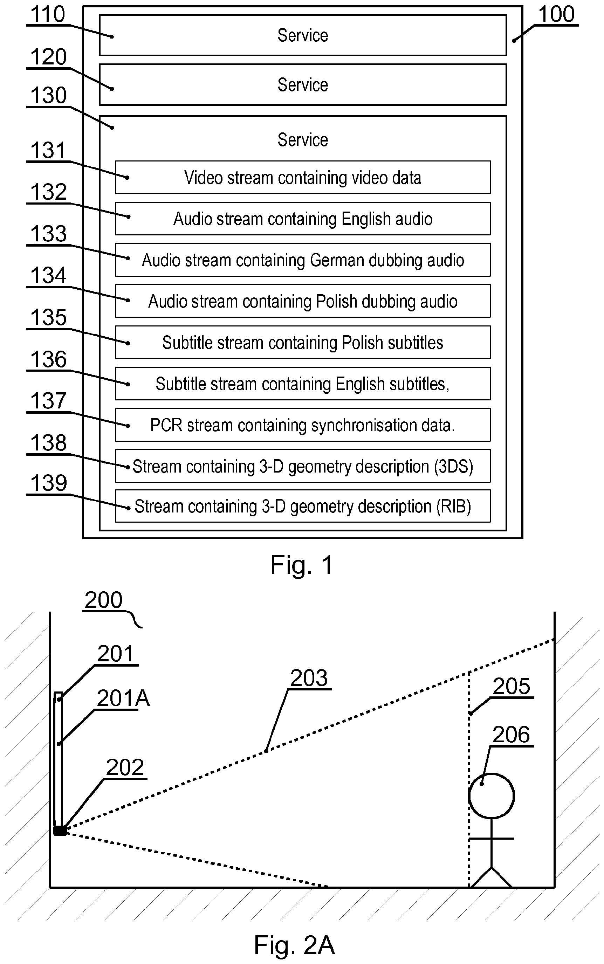

Fig. 1 presents an example of a structure of a video stream, such as a stream compliant with currently used video stream standards, such as DVB (Digital Video Broadcasting) standards or ATSC (Advanced Television Systems Committee) standards. The video stream structure depicted is simplified to show only the elements that are needed for clear understanding of the concepts presented herein. A typical video stream is a collection of several transport streams 100. Each transport stream 100 may comprise a plurality of services 110, 120, 130. Each service 110-130 is observable to the watcher as a single channel, preferably with selectable audio languages and subtitle languages. Each service 110-130 is therefore defined as a collection of elementary streams, each of the elementary streams being a single component. For example, as presented in Fig. 1, the service 130 can contain the following example set of elementary streams: a video stream 131 containing video data, an audio stream 132 containing English audio, an audio stream 133 containing German dubbing audio, an audio stream 134 containing Polish dubbing audio, a subtitle stream 135 containing Polish subtitles, a subtitle stream 136 containing English subtitles, a PCR stream 137 containing synchronisation data.

In order to implement the enhanced user experience functionality, the service further comprises at least one geometry description stream 138, 139, which comprises a descriptor of at least one three-dimensional geometry object within the video stream. For example, stream 138 may define the 3-D geometry object in a 3DS format and stream 139 may define the 3-D geometry object in a RIB format. Other 3-D geometry formats can be used as well. One example of a descriptor of 3-D geometry data is a set of triangles each of the triangles comprising 3 points in a 3-dimensional space. Another example of 3-D geometry descriptor is a polygon containing a bump map (which simulates bumps and wrinkles on the surface of an object). A video stream with the geometry description stream will be called an extended stream hereinafter.

If a target device, such as a TV-set, does not support the geometry description streams, it can simply ignore the unknown elementary stream, which makes the presented solution backwards compatible with the current devices and standards.

However, if the target device supports the geometry description streams as described herein, it can read the descriptors from the streams 138, 139 and render data on top of the displayed video stream. The geometry description streams 138, 139 may comprise a descriptor of the format of the 3-D geometry and the target device can determine which stream 138, 139 is compatible with the format handled by the target device.

The service may comprise only one or a plurality of the geometry description streams 138, 139, each describing a 3-D geometry in a different format. Furthermore, the elementary streams 138, 139 may describe the same or different objects.

The step of rendering of the three-dimensional object within the video stream comprises one or more of the well-known techniques. One example of such technique is ray tracing which is best suited for rendering of reflective objects. Another example of rendering technique is texture mapping which can be realized according to a map being an inherent part of the description of the geometry. Such map would assign one pixel on a texture to each and every pixel being a part of the rendered 3-D geometry.

The rendering is performed by overlaying a camera image on the three-dimensional object. The camera image is captured from a camera connected to the video display device and positioned to capture an image of an area in front of the display screen. For example, the camera can be placed near the display screen, affixed to the display screen or embedded in a casing of the display screen. An example of an environment 200 wherein the functionality can be effected is depicted in Fig. 2A. The environment comprises a TV-set 201 comprising video displaying and receiving blocks (e.g. a terrestrial digital television tuner) and a display screen 201A. The camera 202 which is affixed to the bottom of the TV-set, captures a picture of the environment 200 in front of the display screen, in a direction away from the display screen. The field of view of the camera is marked as a dotted line 203 and the line 205 shows the plane of focus which essentially determines the main object visible in the camera image and allows to visualise a plane and a texture for rendering. A person 206 watching the TV 201 is located in the line of focus. The plane of focus may be determined by a dedicated algorithm configured to detect the position of the watcher 206 within the camera image, e.g. by employing moving object detection algorithms or face recognition algorithms. The camera 202 may be a stereoscopic camera which allows to determine the distance of the objects from the camera and therefore determine the distance of the plane of focus 205 from the plane of the display screen 201A, so as to allow realistic scaling of the rendered image.

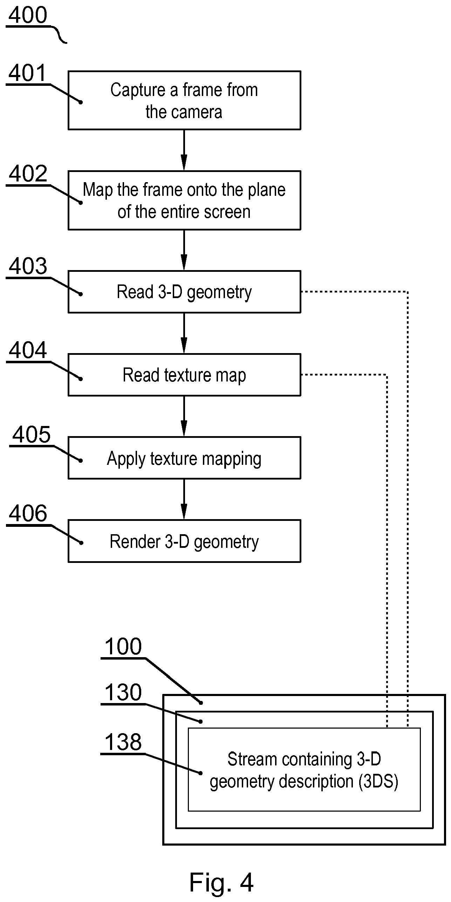

Fig. 4 presents an example of a rendering method 400 by texture mapping. The method starts in step 401 which captures a single frame from the camera 202. Next in step 402 the frame is mapped onto the whole display screen 201A. Such mapping assigns one pixel on the captured frame to each pixel on the display screen 201A. For example, mapping can be performed by scaling the camera image size to the display screen size. Scaling may be not necessary if both the display screen 201A and the camera 202 operate with the same picture resolution. Next, in step 403, a 3-D geometry object descriptor is read from the geometry description stream 138 comprised in the video service currently displayed by the video display device. In step 404 a texture map is read from the geometry description stream 138 and in step 405 the map is applied to the camera image mapped to the TV 201 screen, thus forming a textured 3-D object. Finally, in step 406 the object is rendered.

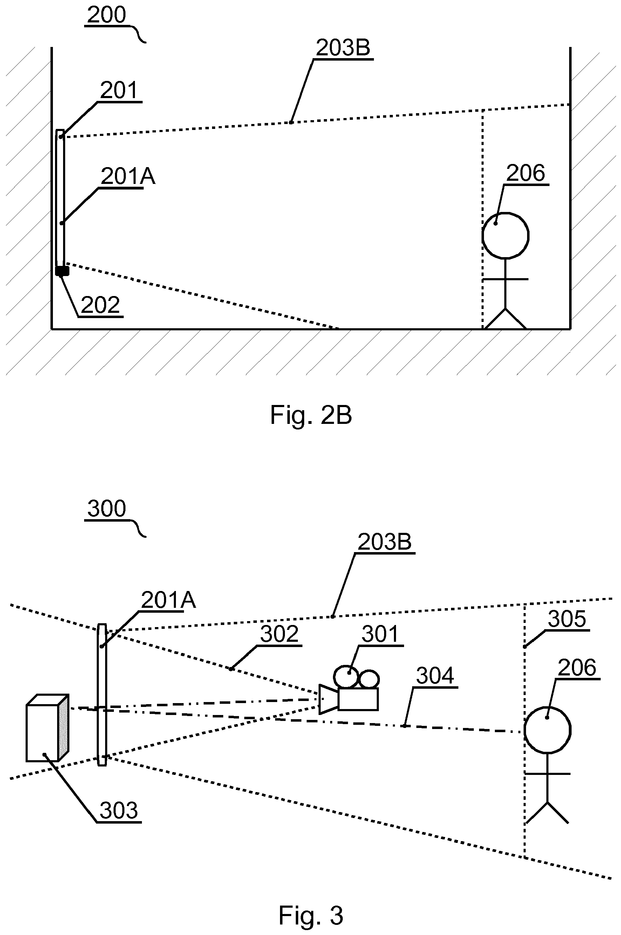

Another example of a rendering method of the 3-D geometry object is ray tracing, which will be described with respect to the environment presented in Fig. 2B. A field of view 203B results from the mapping of the picture from the camera 202 to the display screen 201A as described in step 402 of method 400 of Fig. 4. The model of the environment 300 is presented in Fig. 3. The environment 300 shows a display screen 201A with its aforementioned field of view 203B and the watcher 206. Reference 303 denotes a 3-D geometry object defined by the geometry description stream 138. The ray tracing method requires to define an observation point. Therefore, it is assumed that a camera 301 acts as the observation point. The camera 301 has a field of view 302 covering the entire TV screen 201. The field of view 302 can be modified to achieve additional effects like zooming in or out. The plane 305 represents the picture captured by the camera 202. An exemplary ray used by the ray tracing method is marked as 304. To achieve more sophisticated effects, the field of view of the TV and/or camera may be adjusted and the camera picture may be moved, scaled or otherwise transformed from the shape and position of item 305.

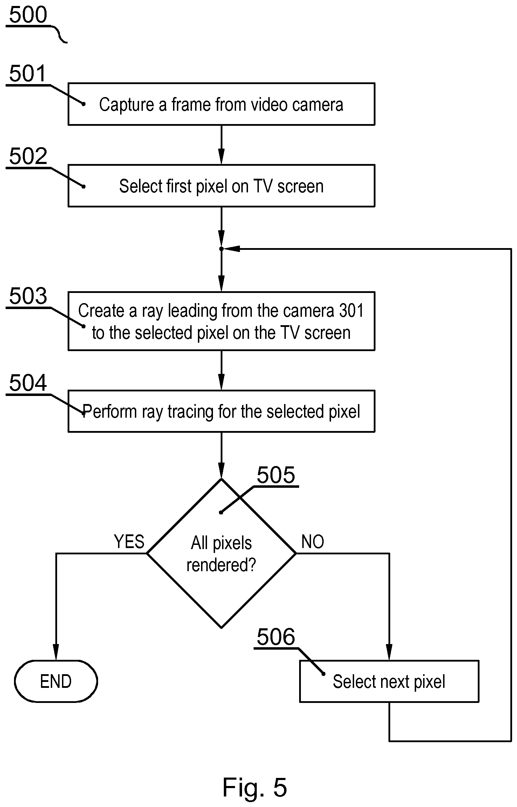

Fig. 5 presents a method for generating the image by using ray tracing. It begins in step 501 by capturing a picture from the camera 202 and positioning it at coordinates of the plane 305. Next in step 502 the first pixel from the TV screen is selected and in step 503 a ray is created leading from the observation point 301 to the pixel according to the environment model shown in Fig. 3 and described earlier. Next in step 504 the ray tracing is performed for the created ray to compute the value of the selected pixel. Next in step 505 it is verified whether all pixels were already rendered. If not, then the next pixel is selected in step 506 and the method loops back to step 503. If in step 505 all pixels were already rendered, the rendering on the current frame ends.

It is apparent to a one skilled in the art that a subset of pixels is enough to render only the geometry of the 3-D object defined in the geometry description stream 138, 139. Therefore optimizations may be introduced to the methods of the present invention limiting the set of pixels actually ray-traced.

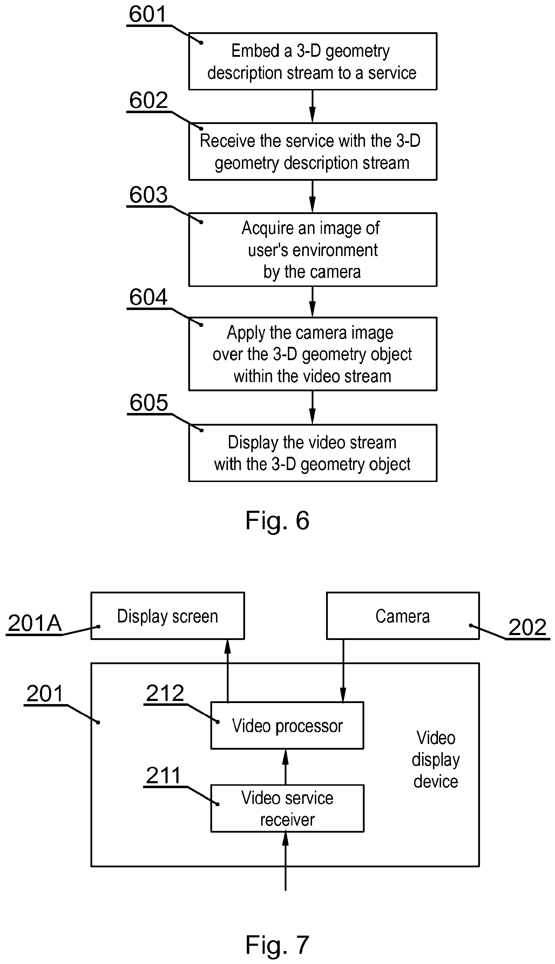

Fig. 6 presents an overview of the method according to the present invention. In the first step 601 the geometry description stream 138, 139 is embedded into a standard service 110-130. The geometry description stream contains a descriptor of a 3-D geometry object within the video stream 131. In step 602 the extended stream 110-130 is received by the display device. Next, in step 603, the user's environment image is acquired by the camera 202. In step 604 the acquired camera image is applied over the 3-D geometry object within the video stream 131 frame. In step 605 the video stream 131 is displayed on the display screen 201A such that it comprises the 3-D geometry object 303 textured with the camera image of the user's environment.

As a result, the presented method and system allow generation of a live video stream with embedded 3-D geometry object that can be modified during presentation of the video stream to the watcher by the image of the environment in which the content is watched. For example, the 3-D geometry object within the video stream may be a mirror, in which the watchers may view their own reflection. Another example may be a spherical reflective surface, in which the watchers may view their own reflection disturbed by the surface sphericity. Therefore, the presented method and system improve the user experience while watching the video stream.

Fig. 7 shows schematically a structure of a system for performing the above-described functionality. The system comprises a display screen 201A and a camera 202 positioned to capture an image of an area in front of the display screen 201A. A video display device 201 comprises a video service receiver 211 (e.g. a digital terrestrial, cable, satellite or IP television) configured to receive 602 a video service 110-130 comprising a video stream 131 and a geometry description stream 138, 139. The video display device 201 further comprises a video processor 212 configured to perform the steps 603-605 of the method of Fig. 6.

It can be easily recognized, by one skilled in the art, that the aforementioned method for generating the video stream may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for generating a video stream in a video display device (201) having a display screen (201A) and connected to a camera (202) positioned to capture an image of an area in front of the display screen (201A), the method comprising:
- receiving (602) a video service (110-130) comprising a video stream (131) and a geometry description stream (138, 139), wherein the geometry description stream (138, 139) comprises a descriptor of a three-dimensional geometry object (303) within the video stream (131);
- capturing (603) a camera image from the camera (202);
- applying (604) the camera image over the 3-D geometry object (303) within the video stream; and
- displaying (605) on the display screen (201A) the video stream (131) comprising the 3-D geometry object (303).

2. The method according to claim 1, wherein the step of applying (604) the camera image over the 3-D geometry object (303) is based on texture mapping (400).

3. The method according to claim 1, wherein the step of applying (604) the camera image over the 3-D geometry object (303) is based on ray tracing (400).

4. The method according to any of previous claims, wherein the video service (110-130) comprises a plurality of geometry description streams (138, 139), each comprising a different format (3DS, RIB) of the descriptor of the three-dimensional geometry object (303).

5. The method according to any of previous claims, wherein the video service (110-130) comprises a plurality of geometry description streams (138, 139), each comprising at least one descriptor of a three-dimensional geometry object (303).

6. A non-transitory computer readable storage medium comprising instructions that, when executed by a computer, enable generating a video stream in accordance with the method according to any of claims 1-5.

7. A system for generating a video stream, comprising:
- a display screen (201 A);
- a camera (202) positioned to capture an image of an area in front of the display screen (201 A); and
- a video display device (201) comprising:
- a video service receiver (211) configured to receive (602) a video service (110-130) comprising a video stream (131) and a geometry description stream (138, 139), wherein the geometry description stream (138, 139) comprises a descriptor of a three-dimensional geometry object (303) within the video stream (131);
- and a video processor (212) configured to:
- capture (603) a camera image from the camera (202);
- apply (604) the camera image over the 3-D geometry object (303) within the video stream; and
- output for display (605) on the display screen (201A) the video stream (131) comprising the 3-D geometry object (303).
